# FASCICULE DE BREVET EUROPEEN

(11) **EP 0 820 801 B1**
(45) Date de publication et mention de la délivrance du brevet: **18.08.2004**
(21) Numéro de dépôt: 97401628.9
(22) Date de dépôt: 08.07.1997
(51) Int. Cl.: B01D 53/70, B01D 53/32

(54) **Procédé et installation de traitement de gaz perfluorés et hydrofluorocarbonés en vue de leur destruction**
Verfahren und Anlage zur Behandlung von perfluorierten und hydrofluorkohlenwasserstoffhaltigen Gasen zu ihrer Vernichtung
Process and installation for the treatment of perfluorinated and hydrofluorocarbonated gases, for the purpose of their destruction

(30) Priorité: 26.07.1996 FR 9609475
(43) Date de publication de la demande: 28.01.1998
(60) Demande divisionnaire: 04075562.1
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Rostaing, Jean-Christophe, 78530 Buc (FR); Coeuret, François, 78280 Guyancourt (FR); de Saint Etienne, Claude, 91400 Orsay (FR); Moisan, Michel, c/o Universite De Montreal, Montreal H3C, Quebec (CA)
(74) Mandataire: Vesin, Jacques

(56) Documents cités:
- EP-A- 0 295 083
- EP-A- 0 602 510
- DE-A- 4 428 418
- US-A- 5 300 202

## Description

La présente invention est relative à un procédé de traitement de gaz perfluorés, en particulier perfluorocarbonés, ainsi qu'hydrofluorocarbonés, en vue de leur destruction, ainsi qu'à une installation de traitement mettant en oeuvre un tel procédé.

La réduction des émissions gazeuses induites par l'activité humaine, soupçonnées de pouvoir contribuer à un réchauffement global du climat par augmentation de l'effet de serre, est aujourd'hui une préoccupation importante des instances internationales. L'élaboration de directives et recommandations au niveau de chaque pays, harmonisées dans le cadre de conventions à l'échelle mondiale, en est aujourd'hui à un stade relativement avancé. Les Etats concernés pourraient à relativement court terme, dans une étape ultérieure, prendre des dispositions légales contraignantes.

Actuellement l'attention des industriels et des gouvernements se porte essentiellement sur l'espèce gazeuse à effet de serre la plus connue, à savoir le dioxyde de carbone (CO₂), dont les flux de rejet et la concentration dans l'atmosphère sont de très loin les plus importants.

Toutefois, d'autres gaz peuvent avoir des contributions également importantes à un possible réchauffement du climat bien que les volumes de leur rejet soient inférieurs de plusieurs ordres de grandeur à celui de CO₂. Ce sont les composés perfluorés (PFC) et hydrofluorocarbonés (HFC). En effet, ces gaz présentent des durées de vie dans l'atmosphère et des absorptions dans l'infrarouge qui donnent lieu à un "pouvoir de réchauffement global" pouvant être de plusieurs ordres de grandeur au-dessus du dioxyde de carbone.

Ainsi, le tétrafluorure de carbone (CF₄) n'existe qu'à une concentration moyenne d'environ une partie par million (ppmv) dans l'atmosphère terrestre contre 300 à 400 ppmv pour le CO₂. En revanche, sa durée de vie dans l'atmosphère est estimée à environ 50000 ans contre 100 pour le CO₂, tandis que son absorption dans l'infrarouge est considérablement plus élevée.

La situation de ces gaz est également particulière en raison de leur utilisation répandue dans l'industrie des semiconducteurs. Ils sont employés pour la gravure en plasma des motifs des circuits intégrés et surtout pour le nettoyage, également par plasma, des réacteurs de dépôt de couches minces. Ils ne sont pas consommés en totalité par ces procédés et donnent lieu à des flux résiduels loin d'être négligeables.

Par rapport à beaucoup d'autres secteurs, l'industrie microélectronique a été très tôt sensibilisée au problème du retraitement des effluents gazeux. Il existe plusieurs raisons à cet état de fait, dont l'une est le caractère spectaculairement dangereux de certains des produits mis en oeuvre : très haute toxicité, caractère hautement corrosif et délétère pour les voies respiratoires, inflammabilité et explosibilité. Il est donc assez compréhensible que cette industrie soit également la première à se préoccuper de la limitation des rejets des gaz perfluorés et hydrofluorocarbonés à effet de serre, qui représentent une nuisance potentielle de nature tout à fait différente, étant en général peu réactifs et d'une toxicité faible à nulle.

En outre, certains producteurs de ces gaz ont choisi de prendre dès à présent des initiatives contraignantes vis à vis de leurs clients, devançant l'évolution prévisible du contexte réglementaire officiel, par exemple en ne fournissant plus les utilisateurs qui ne prennent pas les mesures appropriées pour détruire ou récupérer un pourcentage minimal ( par exemple 80%) du C2F₆ non réagi sortant des machines de procédé.

Par conséquent, les fabricants de circuits intégrés cherchent actuellement à solutionner rapidement le problème de la réduction des émissions de C₂F₆ et plus généralement de tous les PFC et HFC.

L'idée d'une étape intermédiaire consistant à utiliser préférentiellement dans les procédés les molécules qui parmi cette gamme ont les plus faibles pouvoirs de réchauffement globaux, est parfaitement illusoire.

En effet, le choix d'une molécule pour un procédé particulier, de gravure ou de nettoyage du réacteur, est régi par ses propriétés spécifiques. Il n'existe que très peu de substitutions envisageables, spécialement au niveau du nettoyage qui est aujourd'hui l'application impliquant les plus grandes consommations de gaz actifs, et pour lequel C₂F₆,C₃F₈ et NF₃ apparaissent à peu près incontournables pour des raisons de rapidité du procédé.

On doit donc dans tous les cas envisager soit une destruction soit une récupération des gaz perfluorés et hydrofluorocarbonés non réagis dans les procédés et qui seraient autrement rejetés à l'atmosphère.

Il existe plusieurs solutions a priori envisageables pour la destruction des PFC et des HFC, qui ont atteint des niveaux de maturité différents sur le plan technique et commercial.

EP-A-602 510 décrit un procédé de traitement de gaz à effets de serre dans un réacteur dans lequel on crée une décharge luminescente entre deux électrodes.

DE-A-4428418 décrit un dispositif pour rendre inertes des gaz toxiques, par utilisation d'une source micro-onde, le traitement s'effectuant à basse pression.

A l'heure actuelle, seule la destruction pyrolitique par brûleur fait l'objet d'une industrialisation avec des équipements disponibles sur le marché.

Dans ces systèmes, la molécule à détruire est décomposée thermiquement grâce à la chaleur fournie par la combustion de gaz naturel et/ou d'hydrogène. Après décomposition, le fluor se trouve sous forme d'espèces chimiques acides très réactives, HF notamment, qu'il est ensuite très aisé de détruire par réaction sur une solution aqueuse alcaline.

Cette technique est à ce jour largement utilisée. Elle présente toutefois de nombreux inconvénients.

Comme tout processus de combustion dans l'air, elle génère des oxydes d'azote qui sont eux même nuisibles pour l'environnement et font ou vont faire l'objet de limitations réglementaires spécifiques quant à leurs émissions. De plus, si le gaz combustible est le gaz naturel, des quantités importantes de CO₂ vont être générées.

Le potentiel de réchauffement global de l'atmosphère ainsi engendré est très inférieur à celui du gaz fluoré que l'on détruit. Cependant, de nombreux auteurs estiment que cette émission de CO₂ est un élément dissuasif pour la dissémination de la technologie, notamment parce que la réglementation sur le dioxyde de carbone évolue plus rapidement que celle sur les PFC et HFC.

En fait, le gaz naturel n'est que partiellement utilisé, voire totalement absent, pour la destruction des composés PFC et HFC. En effet, pour obtenir des rendements de destruction élevés (95 à 99%), surtout dans le cas des composés les plus stables tels que SF₆ et CF₄, il est nécessaire de brûler de l'hydrogène, et ce en quantité importante. Cela pose naturellement des problèmes de coût et plus encore de sécurité, limitant fortement l'intérêt des utilisateurs potentiels.

Pour pallier ces inconvénients, on a envisagé le traitement des PFC et des HFC par décomposition thermochimique sur un solide, voire la réaction complète pure et simple avec ce solide. Cependant, la grande stabilité de ces molécules restreint singulièrement la gamme des matériaux envisageables, et les températures nécessaires demeurent en général élevées.

Les seuls résultats intéressants ont été obtenus avec des catalyseurs à base de métaux nobles extrêmement coûteux. On n'a pas encore identifié de solide plus commun susceptible d'offrir des efficacités de destruction réalistes, comme c'est le cas avec d'autres molécules pour lesquelles il existe des systèmes commerciaux satisfaisants.

Devant la difficulté que représente la desctruction des composés perfluorés et hydrofluorocarbonés, on peut envisager une autre voie pour en réduire les émissions, à savoir la récupération de ces produits après séparation du mélange d'effluents émis par les réacteurs de procédé. En fait, cette technique n'est pas totalement concurrente de la destruction. En effet, les choix technologiques peuvent être influencés par certains facteurs ayant trait par exemple aux contraintes réglementaires ou aux usages professionnels dans le pays concerné.

C'est ainsi qu'aux Etats-Unis les unités de fabrication des semiconducteurs comportent en général un réseau de collecte et de traitement centralisé des effluents gazeux alors qu'au Japon la pratique va plutôt dans le sens de petits systèmes de traitement proches du point d'émission.

Or, les technnologies connues de récupération ne sont rentables que pour des débits importants et sont particulièrement adaptées pour des solutions centralisées.

Par ailleurs, on ne sait pas aujourd'hui réaliser des systèmes de destruction pour des débits élevés. Les concepts de destruction et de récupération sont complémentaires et doivent être développés en parallèle.

Il existe donc en tout état de cause un besoin pour des systèmes de destruction plus efficaces, moins coûteux et moins contraignants que les brûleurs à hydrogène.

Le but de l'invention est de pallier les inconvénients des procédés connus de traitement de gaz PFC et HFC et de fournir un procédé de traitement de gaz perfluorés et hydrofluorocarbonés en vue de leur destruction pour réduire les émissions de ces gaz dans l'atmosphère, peu coûteux et d'une mise en oeuvre relativement aisée.

Elle a donc pour objet un procédé de traitement de gaz perfluorés et/ou hydrofluorocarbonés, caractérisé en ce qu'il comporte les étapes consistant à :
- créer un plasma à pression atmosphérique dans au moins un tube creux diélectrique ;
- faire circuler lesdits gaz à traiter dans ledit au moins un tube diélectrique en contact avec ledit plasma en vue de la dissociation des molécules constitutives desdits gaz pour former des composés réactifs, notamment fluorés ; et
- faire réagir lesdits composés réactifs formés avec un élément réactif correspondant en vue de leur destruction.
- l'étape de création du plasma gazeux consiste à faire circuler un gaz vecteur dans ledit tube diélectrique et à exciter et ioniser ledit gaz vecteur au moyen du champ électrique d'une onde électromagnétique progressive de surface du type micro-onde circulant dans ledit gaz vecteur et dans ledit tube diélectrique de manière à créer une colonne de plasma hors d'équilibre thermodynamique local.

Le procédé selon l'invention peut en outre comporter une ou plusieurs caractéristiques suivantes :
- l'onde de surface est produite au moyen d'un excitateur d'ondes de surface de type surfatron-guide ;
- ledit gaz vecteur est constitué par exemple d'argon;
- les gaz perfluorés sont choisis notamment parmi CF₄,C₂F₆,C₃F₈,SF₆,et NF₃ et les gaz hydrofluorocarbonés sont choisis parmi CHF₃,CH₂F₂,C₂RF₅ et C₂H₂F₄ ;
- le procédé comporte en outre une étape de mélange des gaz à traiter avec au moins un gaz adjuvant, préalable à ladite étape de circulation desdits gaz dans lesdits au moins un tube diélectrique ;
- le gaz adjuvant est constitué d'oxygène ;
- ladite étape consistant à faire réagir lesdits composés réactifs, avec ledit élément réactif correspondant consiste à faire réagir les composés réactifs avec un élément réactif choisi parmi de la chaux sodée, de l'eau et une solution aqueuse alcaline.

L'invention a également pour objet une installation de traitement de gaz perfluorés et/ou hydrofluorocarbonés en vue de leur destruction, pour la mise en oeuvre d'un procédé de traitement tel que défini ci-dessus, caractérisée en ce qu'elle comporte au moins un excitateur d'ondes de surface à hautes fréquences associé à un guide d'ondes adapté pour acheminer les ondes produites par lesdits au moins un excitateur d'ondes vers au moins un tube creux diélectrique alimenté en un gaz vecteur pour y créer un plasma à pression atmosphérique et dans lequel circulent lesdits gaz à traiter, les molécules desdits gaz perfluorés et/ou hydrofluorocarbonés étant dissociées au sein du plasma pour former des composés réactifs, notamment fluorés, et au moins une unité de traitement desdits composés réactifs disposée en sortie d'un tube creux diélectrique correspondant.

L'installation selon l'invention peut en outre comporter une ou plusieurs caractéristiques suivantes:
- chaque excitateur d'ondes de surface est équipé d'un manchon cylindrique en matériau conducteur à l'intérieur duquel est monté un tube diélectrique correspondant et comporte une zone de concentration des ondes incidentes dans un espace compris entre la paroi interne dudit excitateur et une extrémité libre dudit manchon en vue d'y créer un champ électrique coaxial audit tube ;
- ledit manchon comporte un cylindre interne dans lequel est monté ledit tube diélectrique et un cylindre externe délimitant avec ledit cylindre interne une chambre de refroidissement alimentée en liquide de refroidissement;
- ledit manchon et ledit tube à décharge étant séparés par un espace cylindrique, l'installation comporte des moyens d'alimentation dudit espace en gaz de refroidissement ;
- ledit tube creux diélectrique est constitué par l'association de deux tubes creux diélectriques proprement dits, disposés de façon coaxiale, et entre lesquels est ménagée une chambre cylindrique alimentée en gaz vecteur, lesdits gaz perfluorés et/ou hydrofluorocarbonés circulant dans le tube interne ;
- en variante, le tube diélectrique est réalisé en un matériau insensible aux espèces fluorées excitées notamment en une céramique telle que l'alumine ;
- l'installation comporte en outre un tube en silice coaxial audit tube diélectrique et entre lesquels circule un fluide de refroidissement ;
- chaque excitateur d'ondes de surface est muni de moyens de réglage d'impédance comportant un piston coaxial formant piège en quart d'onde, espacé de la paroi du manchon cylindrique externe dans lequel coulisse le piston ;
- la paroi de chaque excitateur d'ondes de surface voisine de la zone de concentration des ondes incidentes est amincie;
- lesdites au moins une unité de traitement desdits composés stables réactifs sont constituées chacune par une cartouche de chaux sodée ;
- l'installation comporte au moins deux excitateurs d'ondes de surface à hautes fréquences placés en série, au moins deux unités de traitement desdits gaz réactifs, notamment fluorés, disposées chacune en sortie d'un excitateur correspondant, et au moins une unité de déshydratation interposée entre lesdits au moins deux excitateurs ;
- lesdits excitateurs d'ondes de surface sont constitués chacune par un excitateur de type surfatron-guide.

D'autres caractéristiques et avantages ressortiront de la description suivante, donnée uniquement à titre d'exemple et faite en référence aux dessins annexés, sur lesquels :
- la figure 1 est une vue schématique d'une installation de traitement de gaz perfluorés et hydrofluorocarbonés selon l'invention ;
- la figure 2 est une vue en coupe longitudinale d'un excitateur de plasma et du réacteur de traitement associé ;
- la figure 3 est une section transversale selon la ligne III-III d'un élément du réacteur de la figure 2;
- la figure 4 est un spectre infrarouge d'un mélange gazeux en sortie du tube diélectrique montrant la décomposition de SF₆ ;
- la figure 5 est un spectre infrarouge du mélange gazeux de la figure 4 en sortie de la cartouche de chaux sodée, montrant la composition résiduelle après traitement ;
- la figure 6 est un spectre infrarouge d'un mélange gazeux en sortie du tube diélectrique montrant la décomposition de C₂F₆ ;
- la figure 7 est un spectre infrarouge du mélange gazeux de la figure 6 en sortie de la cartouche de chaux sodée montrant la composition résiduelle après traitement ;
- la figure 8 est une vue en coupe longitudinale d'un réacteur de production de plasma selon un autre mode de réalisation ; et
- la figure 9 représente une installation de traitement de gaz perfluorés et hydrofluorocarbonés selon un autre mode de réalisation.

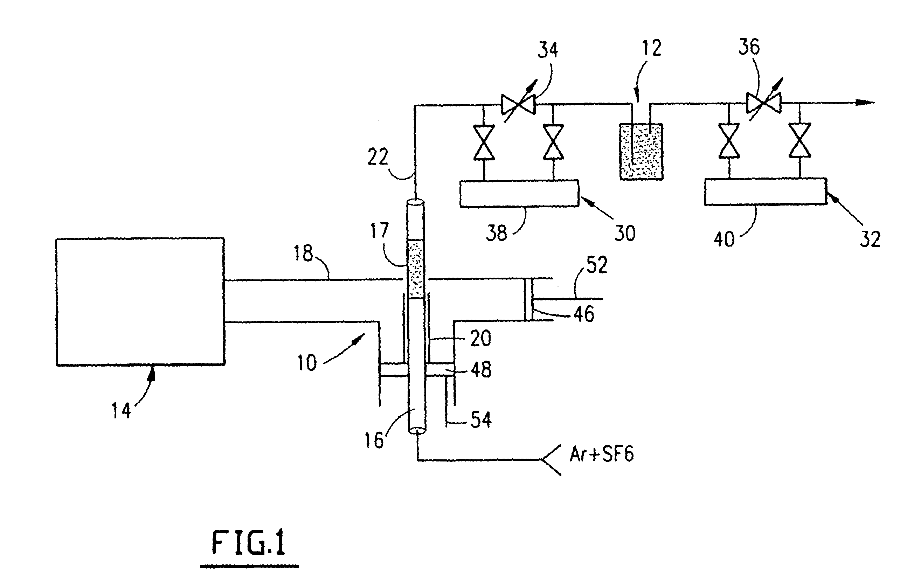

Sur la figure 1, on a représenté une vue schématique d'une installation de traitement de gaz perfluorés, en particulier perfluorocarbonés, ainsi qu'hydrofluoro-carbonés, en vue de leur destruction.

Le but de cette installation est de placer un gaz à traiter dans un champ électrique suffisamment intense pour réaliser une décharge électrique par ionisation du gaz, par suite de l'arrachement d'électrons des molécules du gaz initialement neutres.

Sous l'action de cette décharge, les molécules du gaz sont dissociées pour former des radicaux de tailles plus petites que les molécules initiales, et, par suite, des atomes individuels. En outre, de nouvelles molécules ou de nouveaux fragments moléculaires se forment avec des propriétés chimiques différentes de celles des molécules initiales.

Cette installation est destinée à être montée par exemple en sortie d'un équipement de fabrication de circuits intégrés en vue du traitement des PFC et HFC et en particulier de la conversion de ces effluents gazeux peu réactifs en composés réactifs susceptibles d'être traités selon une technique classique de destruction des effluents acides, comme un traitement sur milieu alcalin, en solution ou solide.

Pour assurer cette conversion, l'installation selon l'invention comporte un dispositif applicateur de champ à hautes fréquences désigné par la référence numérique 10, constitué par un excitateur d'ondes de surface, en vue de la production d'un plasma, pour assurer la conversion des gaz à traiter en gaz réactifs correspondants, en particulier fluorés, et une cartouche de chaux sodée 12 assurant la destruction des gaz convertis par le dispositif générateur de plasma 10.

L'installation comporte, associés à l'applicateur de champ à hautes fréquences 10, un générateur de micro-ondes 14, un tube à décharge 16 dans lequel circule l'effluent gazeux à traiter ainsi qu'un gaz vecteur approprié, et dans lequel est créé le plasma 17, ainsi qu'un guide d'ondes 18.

L'applicateur de champ à haute fréquence est constitué par un applicateur de type surfatron-guide assurant, en coopération avec le guide d'ondes 18, l'acheminement du rayonnement micro-onde créé par le générateur de micro-ondes 14 vers le tube à décharge 16.

Dans l'exemple considéré, et comme représenté sur la figure 1, le gaz vecteur est constitué par de l'argon (Ar) et l'effluent gazeux à traiter est SF₆.

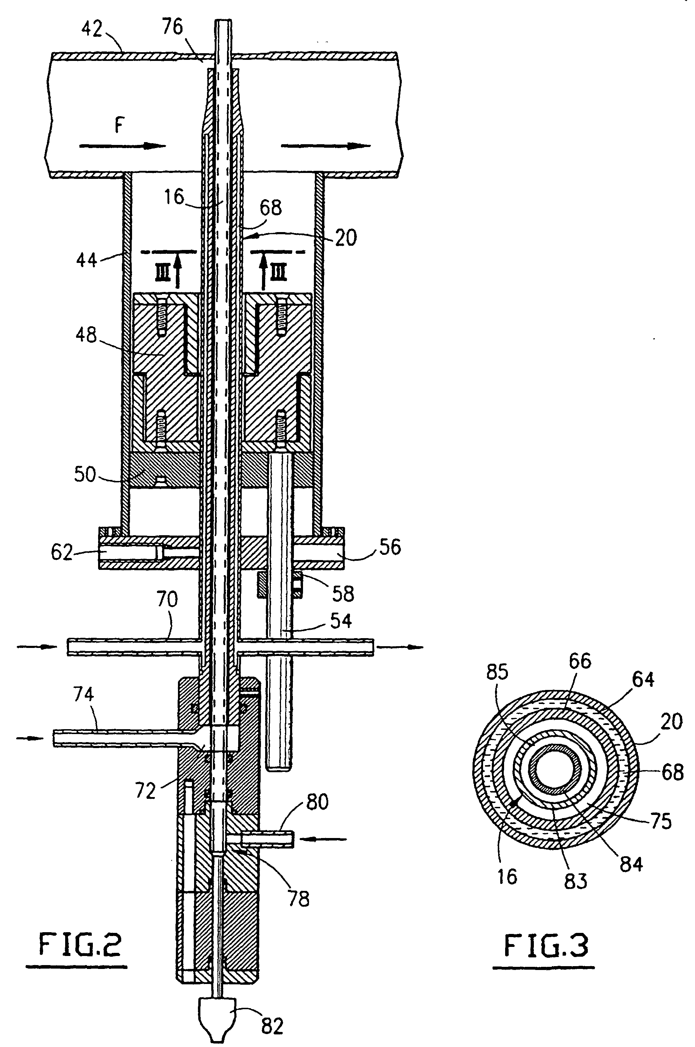

On voit également sur la figure 1 que le tube à décharge 16 est disposé dans un manchon 20, en matériau conducteur et dont la structure sera décrite en détail en référence à la figure 2. Il est relié en aval, en considérant le sens d'écoulement des gaz, à l'extérieur de l'applicateur de champ 18, à une canalisation 22 d'acheminement des gaz convertis vers la cartouche 12.

On voit également sur la figure 1 que la canalisation 22 comporte deux ensembles de dérivation 30 et 32 commandées par des vannes 34 et 36 correspondantes et sur lesquelles viennent se monter de façon étanche des cellules d'échantillonnage 38 et 40 en vue de l'analyse des gaz par spectrométrie infrarouge à transformée de Fourier.

Ces cellules sont des cellules de type simple passage "SPECTRA-TEC" de longueur d'environ 100 mm, ce qui donne une limite de détection amplement suffisante pour l'application envisagée.

On notera que la canalisation 22 est réalisée entièrement en Téflon® PFA, polymère extrêmement résistant aux produits corrosifs. En effet, la durée de vie des composants métalliques, y compris l'acier inoxydable de type 316L est très réduite dans les conditions d'utilisation envisagées.

La description de l'ensemble constitué par le guide d'onde 18 et le tube à décharge 16 va maintenant être faite en référence aux figures 2 et 3.

Comme mentionné précédemment, le guide d'onde 18 est associé à l'applicateur surfatron-guide 10.

Le surfatron-guide 10 comporte une première partie 42 formant guide d'onde proprement dit destinée à l'acheminement du rayonnement micro-onde guidé par le guide d'ondes 18 et incident selon le sens désigné par la flèche F sur la figure 2 et une deuxième partie d'adaptation d'impédance composée de deux éléments, un premier élément 44, coaxial au tube à décharge 16 et appelé par la suite partie coaxiale, et le piston en guide d'onde 46 sur la figure 1.

Par ailleurs, la partie coaxiale 44 a une forme de cylindre dans lequel est monté axialement déplaçable un piston d'accord 48 coaxial au tube à décharge 16 et formant piège en quart d'onde. Il est fixé sur une rondelle 50 de coulissement avantageusement réalisée en Téflon®.

Le surfatron-guide 10 est en outre muni de moyens de commande du réglage de la position axiale des pistons 46 et 48, constitués par des tiges 52 et 54 actionnables manuellement par un utilisateur en vue de l'ajustement en impédance du système générateur de micro-onde/guide d'onde avec le système surfatron-guide/plasma par déplacement des pistons d'accord 48 et de court-circuit 46.

Il est à noter que le piston coaxial 48 assure un court-circuit sans contact au moyen d'un piège en quart de longueur d'onde permettant un fonctionnement à grande puissance ainsi qu'un entretien quasi nul.

En outre, une vis 56 est prévue dans le corps de la partie coaxiale 44 en vue du blocage du piston d'accord 48 en position après avoir effectué le réglage.

On voit en outre sur la figure 2 qu'une butée 58 réglable de limitation du déplacement du piston d'accord 48 est prévue sur la tige de commande 54 correspondante en vue du pré-réglage de l'accord.

Comme mentionné précédemment, le tube à décharge 16 est disposé dans le manchon 20 et est monté axialement déplaçable par rapport à la partie coaxiale 44 et au piston d'accord 48. Le corps de la partie coaxiale 44 comporte en outre un organe de maintien du manchon 20 en position, constitué par une vis 62 transversale.

En se référant en particulier à la figure 3, on voit que le manchon 20 comporte deux parois 64 et 66 coaxiales délimitant entre elles une chambre cylindrique 68 en communication avec un circuit 70 de refroidissement par eau, partiellement représenté sur la figure 2.

On conçoit que, en fonctionnement, de l'eau circule entre les parois interne 64 et externe 66 assurant ainsi le refroidissement du manchon 20.

Par ailleurs, le manchon 20 est relié, à l'aide d'une bride de raccordement 72 appropriée à une canalisation 74 d'alimentation en air comprimé en vue de provoquer un courant-d'air forcé dans l'interstice 75 entre le tube à décharge 16 et la paroi interne 66 du manchon 20 conducteur pour provoquer un refroidissement supplémentaire.

Ceci est nécessaire pour le fonctionnement à la pression atmosphérique à laquelle le gaz du plasma atteint des températures nettement inférieures à celles des électrons mais néanmoins susceptible d'entraîner, en l'absence de refroidissement, la fusion du tube à décharge 16.

On voit sur la figure 2 qu'une extrémité libre du manchon 20 débouche dans le guide d'onde 42 et délimite avec la paroi interne de celui-ci un interstice de lancement 76 ou "gap" par l'intermédiaire duquel l'énergie micro-onde localisée en ce point est transmise au plasma par une onde de surface.

Il est à noter que la section de la paroi du surfatron-guide 18 voisine de l'interstice de lancement 76 est amincie à une épaisseur comprise entre 0,5 et 0,7 mm par enlèvement de matière dans la paroi externe du guide d'onde 42 afin de ne pas entraver l'excitation des ondes de surface, faute de quoi des pertes importantes de puissance micro-ondes apparaîtraient par échauffement dans la structure constitutive de la paroi du guide d'onde 42.

Il est également à noter que l'interstice de lancement 76 est réglable par déplacement axial du manchon 20 dans la partie coaxiale 44 et par blocage à l'aide de la vis 62. Ce réglage permet d'optimiser l'accord d'impédance en évitant la formation d'un arc électrique dans l'interstice de lancement 76 lorsque l'installation fonctionne à des puissances micro-ondes élevées.

On voit par ailleurs sur la figure 2 que le tube à décharge 16 est relié, à l'aide d'un raccord approprié 78 à une conduite 80 d'alimentation en gaz vecteur, constitué d'argon comme mentionné précédemment, en vue de son injection dans le tube sous forme annulaire, et dont le rôle sera décrit en détail par la suite.

On voit enfin sur cette figure qu'une extrémité libre du tube à décharge 16 est reliée à un raccord 82, schématiquement représenté, en vue de la connexion du tube à décharge 16 à une source d'alimentation en mélange gazeux à traiter, non représentée.

Il est à noter que le tube à décharge est réalisé en matériau diélectrique. Selon un premier mode de réalisation, ce tube 16 est constitué par un tube creux en silice 83 comportant un diamètre externe par exemple égal à 8 mm et un diamètre interne par exemple égal à 6 mm.

On conçoit que la construction du surfatron-guide et du tube à décharge permet de concentrer le rayonnement micro-onde produit par le générateur 14 dans l'interstice de lancement 76 de manière à faire se propager dans le tube à décharge 83 (figure 3) et dans le mélange gazeux ionisé qu'il contient une onde électromagnétique progressive de surface dont le champ électrique associé maintient une décharge dans le mélange gazeux. Cette constitution permet donc que le champ électrique de l'onde incidente soit communiqué au plasma selon la direction axiale du tube à décharge 16 à travers l'interstice de lancement 76.

Le plasma ainsi engendré se présente sous la forme d'une colonne et sa densité électronique décroît à partir de l'interstice de lancement selon une fonction connue.

Le diamètre du tube à décharge 16 est choisi suffisamment petit pour obtenir un unique filament de plasma centré sur l'axe du tube qui puisse être établi de manière stable et reproductible. En effet, lorsque l'on opère à pression atmosphérique, pour des diamètres suffisamment grands, le diamètre du plasma lui-même n'augmenterait pas, et l'effluent gazeux à traiter circulant à la périphérie subirait une interaction de plus en plus atténuée avec les espèces actives du plasma. En outre, plusieurs filaments de plasma pourraient se former avec un comportement erratique et une possibilité de collage contre la paroi du tube à décharge ce qui provoquerait une dégradation de ce dernier.

Il est à noter, qu'afin d'augmenter les débits admissibles, il est possible d'associer en parallèle plusieurs tubes à décharge de petits diamètres, ou de monter en série plusieurs applicateurs de micro-ondes sur un même tube.

La disposition qui vient d'être décrite permet de créer, sur le trajet de l'effluent gazeux à traiter, un plasma qui est le siège d'excitations énergétiques électroniques très élevées, correspondant à des températures de plusieurs dizaines de milliers de kelvins, permettant ainsi, par collisions électroniques, une transformation avec un rendement élevé des molécules de l'effluent gazeux, d'un état relativement inerte chimiquement vers un état réactif.

Il est à noter que le plasma créé par cette installation est un plasma hors d'équilibre thermodynamique local (ETL).

Dans ce type de plasma, seuls les électrons présents dans le milieu sont portés à des énergies élevées, les températures des espèces ioniques et neutres restant beaucoup plus basses, en fait souvent assez proches de la température ambiante. Dans un système qui n'est pas en équilibre thermodynamique, un grand nombre d'états peuvent être atteints en jouant sur les paramètres de la décharge, par exemple la fréquence du champ électromagnétique, le diamètre du tube à décharge, et la composition du mélange gazeux à traiter, en y ajoutant des adjuvants.

Par contre, si l'on considère le cas des plasmas en équilibre thermodynamique local (ETL), où toutes les espèces se trouvent à une même température très élevée (de l'ordre de plusieurs dizaines de milliers de K), le bilan réactionnel total n'est pas toujours favorable pour l'accomplissement d'un processus de transformation chimique particulier.

Comme dans tout système en équilibre thermodynamique local l'état final de la transformation est déterminé essentiellement par la température du système. Des chemins de réactions indésirables peuvent être favorisés aussi bien que les transformations élémentaires utiles au résultat recherché. De plus, l'enthalpie très importante du milieu entraîne des contraintes d'implantation (refroidissement...) outre que l'entretien de cette enthalpie est énergétiquement très coûteux.

On conçoit donc que les décharges réalisées en dehors de l'équilibre thermodynamique local sont à la fois plus efficaces énergétiquement et offrent la possibilité de trouver des conditions de fonctionnement davantage optimisées pour réaliser la transformation des molécules envisagées.

Les niveaux d'excitations énergétiques très élevés qu'atteignent certaines espèces fluorées dans la décharge peuvent les rendre particulièrement agressives chimiquement vis-à-vis du tube à décharge, pouvant entraîner le perçage de la paroi de ce dernier en quelques minutes.

Pour résoudre le problème de l'attaque du tube à décharge, on voit sur la figure 3 une configuration où ce tube comporte deux tubes coaxiaux en silice, à savoir un premier tube creux externe 83 à décharge proprement dit, de diamètre externe par exemple égal à 8 mm et de diamètre interne par exemple égal à 6 mm, et un tube creux interne 84, de faibles diamètres, de diamètre externe par exemple égal à 4 mm et de diamètre interne par exemple égal à 2 mm, permettant d'injecter le mélange gazeux à traiter dans la zone de décharge.

Ces tubes délimitent une chambre cylindrique 85 permettant l'injection d'argon, à l'aide du raccord 78, autour du tube interne 84, créant ainsi un gainage du gaz réactif en vue de réduire le taux d'espèces corrosives susceptible d'arriver sur la paroi du tube à onde de surface.

Le tube interne 84 ne sert qu'à injecter le mélange gazeux à traiter dans la zone de décharge, il se trouve situé entièrement à l'extérieur de cette dernière, ne supporte la propagation d'aucune onde électromagnétique de surface, et ne joue aucun rôle dans l'entretien du plasma, faute de quoi il serait lui aussi très rapidement dégradé.

Plus précisément, son extrémité aval ne dépasse pas celle du manchon interne conducteur 20 et aucun tronçon de ce tube ne se trouve dans l'interstice de lancement.

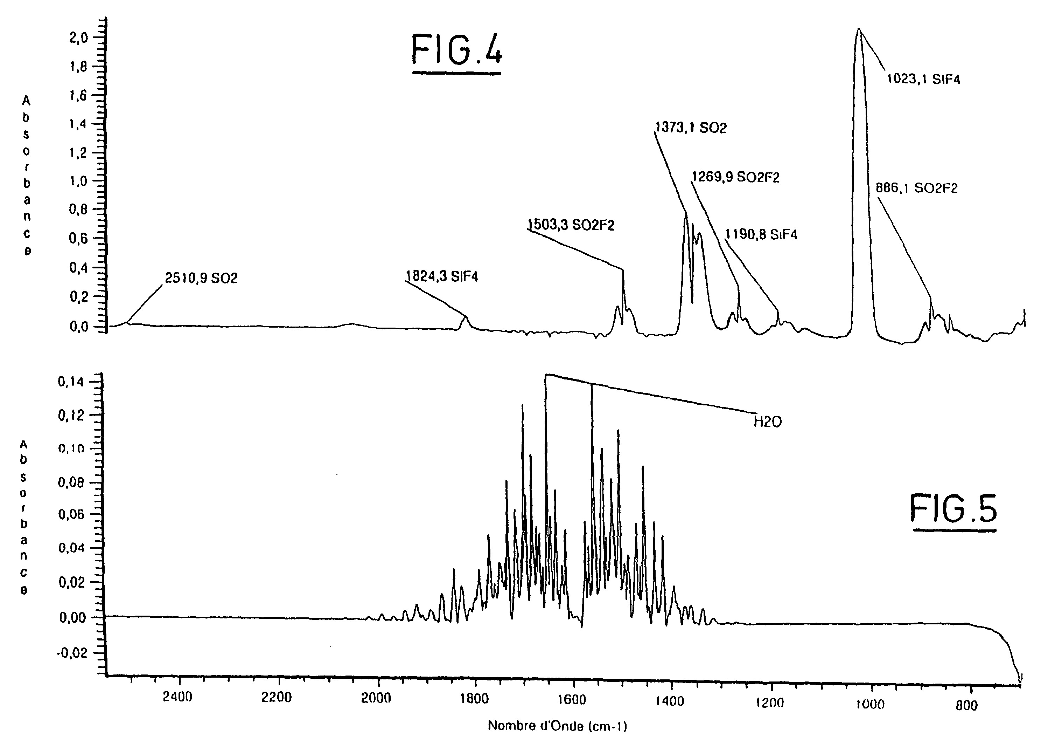

Différents résultats expérimentaux vont maintenant être exposés en référence aux figures 4 à 7.

La destruction de SF₆ va tout d'abord être décrite en référence aux figures 4 et 5.

Ces figures sont des spectres d'absorbance infrarouge en fonction du nombre d'ondes du gaz traité échantillonné respectivement en sortie du tube à décharge 16 et en sortie de la cartouche de chaux sodée 12.

L'effluent gazeux à traiter est constitué de SF₆ sous un débit de 50 sccm (cm³ standard par minute) avec une dilution d'argon de 300 sccm, la puissance micro-ondes incidente étant fixée à 300 W.

Préalablement, et comme mentionné précédemment, le réglage d'accord d'impédance du générateur de plasma 10 est effectué en agissant sur la longueur de l'interstice de lancement 76, sur la position du piston d'accord coaxial 48 et sur la position du piston de court-circuit en guide d'onde 46.

Il est à noter que seuls les deux derniers réglages, à savoir le réglage du piston d'accord 48 et du piston de court-circuit 46 peuvent être manoeuvrés en temps réel, le plasma étant allumé, en utilisant les tiges de manoeuvre 52 et 54.

Par ailleurs, l'interstice de lancement 76 ne peut être ajusté que par approximations successives, les modifications étant faites sans allumer le plasma pour ne pas exposer l'opérateur à un rayonnement de fuite incompatible avec les normes de sécurité. L'accord étant réalisé, on obtient une puissance réfléchie de quelques watts seulement.

En fonctionnement, on constate que le gainage à l'argon 85 est d'une bonne efficacité pour ralentir l'attaque du tube à décharge 16.

En se référant à la figure 4, la décharge étant établie, l'analyse en amont de la cartouche 12 révèle une absence de pics correspondants à SF₆, tandis qu'apparaissent des raies d'absorption caractéristiques de produits formés par les réactions dans la décharge, parmi lesquels on identifie notamment SO₂ à 2510,9 cm⁻¹ et 1373,1 cm⁻¹, SO₂F₂ à 1503,3 cm⁻¹, 1269,9 cm⁻¹ et 886,1 cm⁻¹, et SiF₄ à 1824,3 cm⁻¹, 1190,8 cm⁻¹ et 1023,1 cm⁻¹, l'attaque du tube de silice jouant un grand rôle dans la génération de ces produits. Tous ces produits sont remarquables par leur caractère plus ou moins acide.

Sur la figure 5, on voit qu'en aval de la cartouche de chaux sodée 12 seules subsistent des bandes correspondant à de la vapeur d'eau, ce qui s'explique par le fait que, d'une part, la chaux sodée présente normalement un degré d'humidité assez élevé, d'ailleurs nécessaire à son efficacité de réaction avec les espèces réactives fluorés et, d'autre part, que la chaîne de traitement débouche finalement à l'air libre. Il est également à noter qu'un très faible pic de SF₆ à 947 cm⁻¹ apparaît en régime transitoire dû à la désorption de SF₆ préalablement absorbé par la surface interne de la canalisation 22. Ce pic disparaît rapidement en régime de flux permanent.

On remarque donc que le résultat recherché, à savoir la disparition totale de SF₆ est atteint après traitement.

Ainsi, une telle installation montée en aval d'un réacteur de fabrication de circuits intégrés assure la destruction quasi totale des effluents gazeux et aussi un rejet de produits de transformation dans l'atmosphère en dessous de limites imposées par une réglementation ou consacrées par la pratique dans l'industrie micro-électronique.

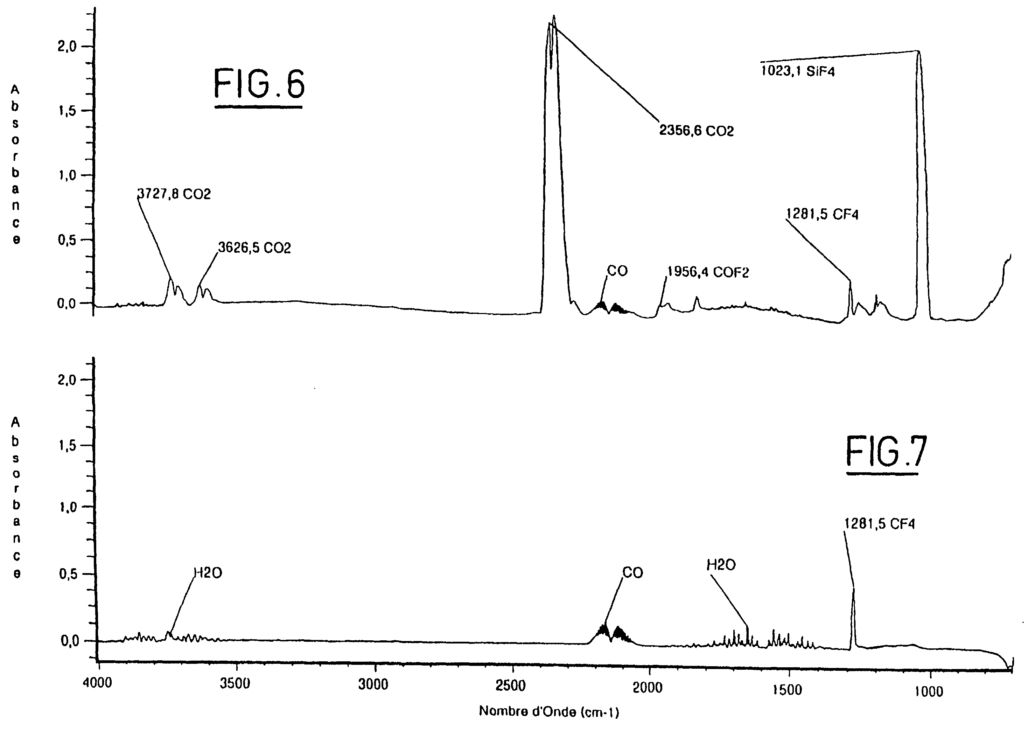

En se référant aux figures 6 et 7, on voit que la même technologie de traitement peut s'appliquer à C₂F₆, dont les molécules présentent actuellement le plus grand intérêt commercial pour le nettoyage par plasma des réacteurs de dépôt de couches minces, car sa dissociation dans les décharges radiofréquences employées dans ce cas est plus aisée, ce qui conduit à une concentration nettement accrue d'espèces actives dans la décharge, d'où une vitesse d'attaque substantiellement augmentée.

Dans le cas de cette molécule cependant, il existe a priori une difficulté en raison de dépôts éventuels d'une couche mince solide de carbone amorphe sur la paroi interne du tube à décharge 16. Ce film de carbone amorphe aurait nécessairement une fonction diélectrique différente de celle de la silice (en fait, il serait relativement bon conducteur par rapport à cette dernière) et sa présence modifierait donc les conditions de propagation de l'onde, ce qui perturberait le plasma, éventuellement jusqu'à l'extinction.

Il y aurait toujours une possibilité d'injecter dans les effluents gazeux des gaz additionnels capables d'attaquer le carbone amorphe et de nettoyer le tube en continu, mais cela restreindrait les possibilités d'opti-continu, mais cela restreindrait les possibilités d'optimisation pour les processus de conversion dans la phase gazeuse (en fait, il faut tout de même remarquer que C₂F₆ est toujours associé à O₂ dans les procédés de nettoyage de réacteurs, ce qui pourrait très bien s'avérer suffisant).

Des essais préliminaires montrent que la destruction d'une fraction important du flux de C₂F₆ requiert l'application d'une puissance micro-onde incidente plus élevée que pour un même flux de SF₆. Plus précisément, il existe une assez forte probabilité de transformation de C₂F₆ en CF₄, lequel est au moins aussi difficile à dissocier que SF₆.

Il est toutefois à noter que, même sans apport d'O₂ (C₂F₆ + Ar seulement), il ne semble pas qu'il se produise un quelconque dépôt de carbone sur le tube, et que le plasma n'est pas perturbé au cours du traitement. Toutefois l'attaque de la paroi du tube de silice par les espèces fluorées peut constituer une source non négligeable d'oxygène.

Le traitement de C₂F₆ a été effectué avec une puissance micro-ondes incidente de 400 W et des débits incidents de 300 sccm Ar dans le tube externe 83 et de 100 sccm Ar, 50 sccm de gaz adjuvant constitué par du O₂ et 50 sccm de C₂F₆ dans le tube central interne 84.

La décharge étant établie, on obtient en sortie de plasma le spectre infrarouge de la figure 6. Aucun des pics correspondant à C₂F₆ n'est observable, mais il y a eu génération d'une faible concentration de CF₄. Les autres produits de transformation identifiés sont le CO₂, le SiF₄ ainsi que du CO, qui sont pour la plupart connus pour réagir avec la chaux sodée humide, sauf en ce qui concerne CO.

Le spectre d'analyse infrarouge après la cartouche (figure 7) montre que les quantités résiduelles pour SiF₄ et COF₂ sont très probablement en dessous des VME (valeur moyenne d'exposition). Il n'y a en effet pas de signal détectable. En revanche, il faudrait quantifier la concentration de CO pour vérifier qu'elle se trouve bien sous la VME pour cette molécule (50 ppm).

La génération de CF₄ dans le système introduit une certaine ambiguïté sur la définition de l'efficacité de destruction. En effet, il est à noter que ce composé est réputé sans aucune toxicité et n'a pas de VME. Il ne peut donc y avoir de limite absolue réglementaire aux concentrations rejetées. D'autre part les normes de rejet en préparation pour les gaz à effet de serre portent sur une réduction relative (ex. 80% des concentrations initiales). Or, il n'y a pas de CF₄ dans les effluents à traiter. On remarquera toutefois que la concentration finale de CF₄ semble assez faible par rapport à la concentration initiale de C₂F₆.

Cependant, une augmentation du débit d'oxygène à 100 sccm a montré que les réactions dans la décharge ne produisent plus globalement de CF₄. On constate donc qu'en termes d'efficacité de destruction les résultats sont également très positifs dans le cas de C₂F₆. En revanche, le problème de l'attaque du tube à décharge 16 se pose avec plus d'acuité du fait, entre autre, de l'augmentation de la densité de puissance micro-ondes dans la décharge.

Pour pallier cet inconvénient, il est possible de réaliser le tube à décharge en un matériau nettement moins susceptible d'être attaqué par les espèces fluorées excitées, par exemple en céramique, comme l'alumine. On vérifie facilement qu'un tube d'alumine immergée dans une solution aqueuse d'acide fluorhydrique ne subit sensiblement pas de dégradation. Toutefois, ce matériau présente un inconvénient, en raison de sa très grande sensibilité aux chocs thermiques lors de l'amorçage et de la coupure du plasma.

Cependant, l'effet de ces chocs thermiques peut être atténué en prévoyant un refroidissement par circulation d'un liquide à la périphérie du tube à décharge. Un tube concentrique externe réalisé en silice assure le confinement du fluide de refroidissement, qui circule dans l'espace cylindrique formé entre les deux tubes. Le liquide de refroidissement est en particulier de l'eau.

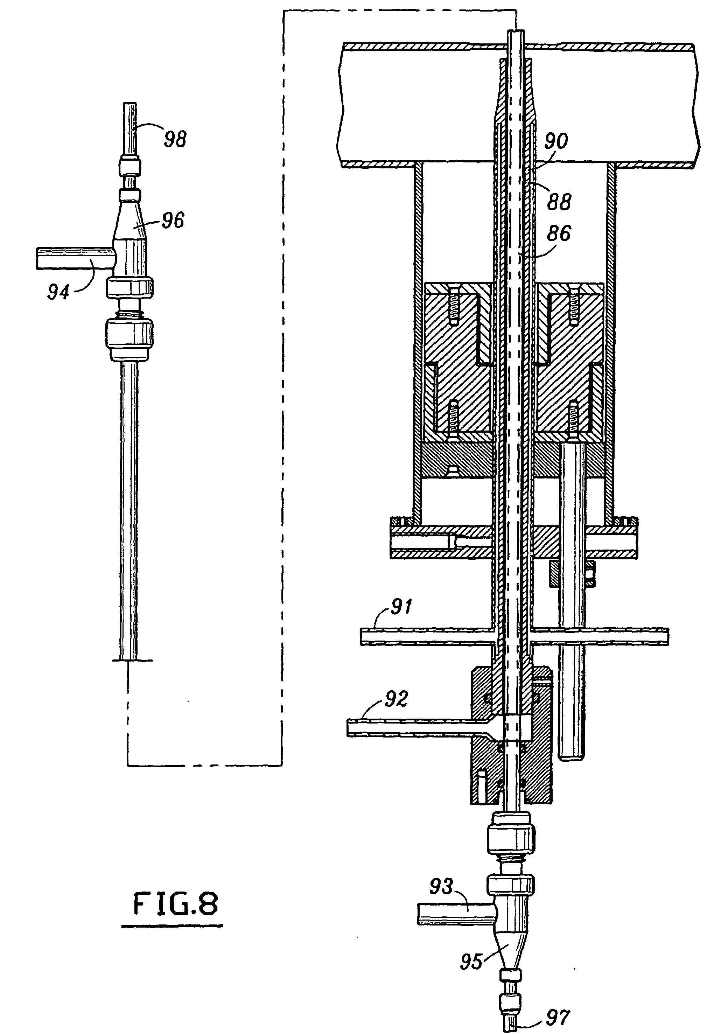

On a représenté sur la figure 8 un tube à décharge 86 réalisé tel que décrit ci-dessus.

On voit sur cette figure le tube à décharge 86 en céramique entouré du tube externe 88 en silice, ces deux tubes étant placés dans un manchon 90, similaire au manchon décrit précédemment.

On voit en outre sur cette figure que, comme dans l'exemple de réalisation précédent, le manchon 90 est raccordé à un circuit de refroidissement 91 partiellement représenté.

De même, une circulation de gaz de refoidissement délivré par une conduite 92 d'alimentation correspondante, est également prévue dans l'espace compris entre le manchon 90 et le tube en silice 88. Toutefois, ce refroidissement gazeux est ici optionnel du fait de la présence du refroidissement par eau du tube à décharge, qui est en général nettement plus efficace que le premier.

L'eau de refroidissement circule dans l'espace compris entre le tube à décharge 86 et le tube externe en silice 88, entre une tubulure d'entrée 93 et une tubulure de sortie 94. Si l'on utilise de l'eau de ville en circuit ouvert, la pression d'entrée est celle du réseau et l'eau extraite de la tubulure de sortie 94 est rejetée à l'égout.

Si l'on utilise au contraire un refroidissement en circuit fermé, ce dernier comporte à l'extérieur du tube à décharge des dispositifs de pompage et de refroidissement en continu appropriés, non représentés.

Des raccords 95 et 96 sont conçus comme on le voit de manière à assurer l'étanchéité de l'espace intertubulaire où circule l'eau de refroidissement vis à vis du milieu ambiant.

En outre, le gaz vecteur et les gaz à traiter sont fournis simultanément à l'aide d'une conduite d'alimentation connectée à l'extrémité amont 97 du tube à décharge 86 à l'aide d'un raccord approprié non représenté.

Les gaz traités sont ensuite fournis à une unité de traitement similaire à celle décrite précédemment à l'aide d'une canalisation raccordée à l'extrémité aval 98 du tube à décharge 86 par l'intermédiaire d'un raccord approprié non représenté.

Il est à noter que ce refroidissement par eau ne présente d'intérêt que pour un plasma d'ondes de surface à la pression atmosphérique. En effet, dans ce cas, le plasma très dense engendré emprunte une part appréciable de l'énergie fournie par les micro-ondes, alors que cette énergie ne servirait pratiquement qu'à chauffer l'eau dans le cas d'un plasma moins dense entretenu à basse pression.

Il est cependant nécessaire, même dans le premier cas, de réduire le plus possible l'épaisseur de la couche d'eau de refroidissement, de manière à minimiser les pertes d'énergie électromagnétiques dans cette dernière.

Des résultats satisfaisants ont été obtenus avec un tube d'alumine de diamètre externe de 5 mm et de diamètre interne de 4 mm avec un débit de C₂F₆ égal à 25 sccm, avec un débit d'O₂ égal à 30 sccm et un débit d'argon égal à 500 sccm. Avec une puissance micro-ondes égale à 900 W, non seulement aucun pic de C₂F₆ n'est observable, mais les pics de CF₄ ont également pratiquement disparu.

Toutefois, les différentes expérimentations qui ont été réalisées à l'aide de cette installation ont mis en évidence une certaine saturation des débits admissibles de l'ordre de 50 à 70 sccm (cm³ standard/mn) ce qui est insuffisant pour beaucoup d'applications.

Il a été en effet constaté qu'au-delà d'une certaine puissance micro-onde fournie par le générateur à l'applicateur surfatron-guide, la fraction dissociée du gaz entrant (SF₆,C₂F₆, etc... ) n'augmente pratiquement plus. Dans ce cas, l'énergie micro-onde supplémentaire ne semble servir qu'à exciter sur des niveaux plus élevés les produits de dissociation et non plus à décomposer davantage de molécules du gaz entrant.

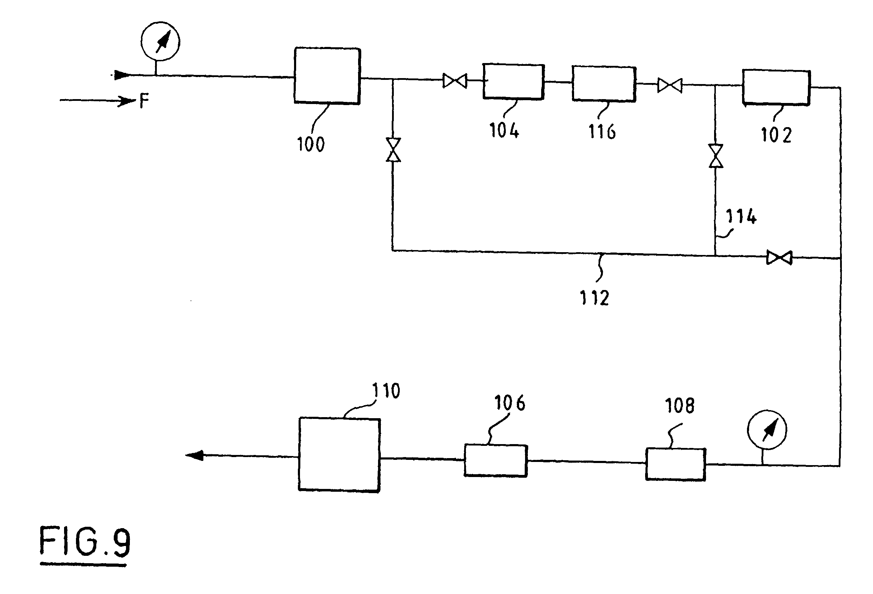

On a représenté sur la figure 9 une installation permettant de pallier cet inconvénient, dans laquelle deux étages 100 et 102 générateurs de plasma associés chacun à un tube à décharge correspondant sont disposés en série.

Ces étages 100 et 102 sont identiques à ceux décrits précédemment en référence aux figures 1 à 3 et leur description ne sera donc pas reprise par la suite.

La canalisation dans laquelle circulent les effluents gazeux en traitement, décrite en référence à la figure 1, a été modifiée pour cette installation de manière à faire passer successivement le courant d'effluent gazeux à traiter selon la flèche F dans le premier étage 100 générateur de plasma puis dans une première cartouche 104 de chaux sodée, puis vers le deuxième étage 102 générateur de plasma et enfin vers une deuxième cartouche 106 de chaux sodée.

De la sorte, la première cartouche de chaux sodée retire du courant gazeux à traiter toutes les espèces dissociées et/ou réactives produites par le premier plasma, de façon que seule la fraction du gaz à traiter, non réagie dans le premier plasma, soit introduite dans le second.

Par ailleurs, des cellules d'analyse 108 et 110, identiques aux cellules décrites précédemment en référence à la figure 1, sont placées de part et d'autre de la deuxième cartouche 106 de chaux sodée.

En outre, deux branches de dérivation 112 et 114 permettent l'analyse des flux gazeux après le passage dans le premier étage 100 générateur de plasma et après la première cartouche 104 de chaux sodée.

Lorsque l'on essaie de faire fonctionner simultanément les deux plasmas avec un mélange C₂F₆/O₂/Ar semblable à celui utilisé dans l'essai décrit en référence aux figures 6 et 7, on s'aperçoit que le fonctionnement de la deuxième décharge est extrêmement perturbé et en fait s'interrompt au bout de quelques secondes. Il est naturel de supposer que cela est lié à la présence de la cartouche de chaux sodée 104 située en amont de ce second plasma. La chaux sodée peut introduire dans le courant gazeux des éléments susceptibles d'étouffer le plasma en aval.

Tout d'abord, les granulés de chaux sodée du commerce engendrent notoirement de grandes quantités de particules solides de très faible taille non visibles à l'oeil nu. L'effet spectaculaire des ces particules sur le comportement des décharges est bien connu. En particulier, ces particules agissent comme des pièges à électrons extrêmement efficaces et s'opposent donc très fortement à l'entretien des plasmas.

Par ailleurs, pour réagir efficacement avec les effluents gazeux acides, la chaux sodée doit être légèrement humide. La réaction de neutralisation produite dans la chaux sodée produit un surplus d'importantes quantités d'eau. Lorsque de la vapeur d'eau est introduite dans le deuxième générateur de plasma 102, sa dissociation crée d'importantes concentrations d'hydrogène qui tendent également à atténuer fortement le plasma. Il est en effet bien connu qu'il est plus difficile d'entretenir une décharge micro-onde dans l'hydrogène que dans l'argon.

Pour pallier cet inconvénient, on insère entre la première cartouche 104 de chaux sodée et le second étage générateur de plasma 102, des moyens de rétention des particules et de l'eau, constitués par exemple d'une cartouche 116 de gel de silice, très efficace pour déshydrater le courant gazeux, et qui semble également arrêter la majeure partie des particules. Si cela n'était pas le cas, on pourrait également disposer un filtre à particules.

En faisant fonctionner cette installation avec une puissance de micro-ondes pour le premier étage 100 égale à 1100 W et une puissance de micro-ondes pour le deuxième étage 102 égale à 800 W, avec un débit de C₂F₆ égal à 200 sccm, un débit d'O₂ égal à 215 sccm et un débit d'argon égal à 5000 sccm, 80% de C₂F₆ et du CF₄ engendré sont détruits, ce qui permet d'atteindre les buts imposés par les recommandations ou réglementations en vigueur ou en cours de préparation.

Il est à noter que la description d'un exemple de traitement faite en référence aux figures 4 à 7 se rapporte au traitement de SF₆ et de C₂F₆, mais bien entendu le procédé de traitement décrit précédemment s'applique également à tous types de gaz perfluorés ou hydrofluorocarbonés, ainsi qu'à d'autres types de gaz halogénés, par exemple les chlorofluorocarbonés.

Par ailleurs, dans la description de l'installation faite précédemment, le plasma est créé à l'aide d'un surfatron-guide. Il est également possible, en variante, de doter l'installation d'autres dispositifs de création de plasma à hautes fréquences, par exemple un surfaguide ou un "Ro-Box" en ce qui concerne les ondes de surface, ou dispositif à cavité résonante, de type connu.

## Revendications

1. Procédé de traitement de gaz perfluorés et/ou hydrofluorocarbonés, comportant les étapes consistant à :
- créer un plasma à pression atmosphérique (17) dans au moins un tube creux diélectrique (16) à l'aide d'une onde électromagnétique progressive de surface du type micro-onde, par circulation d'un gaz vecteur dans ledit tube diélectrique (16) et excitation et ionisation dudit gaz vecteur au moyen du champ électrique de l'onde électromagnétique progressive de surface circulant dans ledit gaz vecteur et dans ledit tube diélectrique (16) de manière à créer une colonne de plasma (17) hors d'équilibre thermodynamique local ;
- faire circuler lesdits gaz à traiter dans ledit au moins un tube diélectrique (16) en contact avec ledit plasma (17) en vue de la dissociation des molécules constitutives desdits gaz pour former des composés réactifs, notamment fluorés ; et
- faire réagir lesdits composés réactifs formés avec un élément réactif correspondant (12) en vue de leur destruction.

2. Procédé de traitement selon la revendication 1, **caractérisé en ce que** l'onde de surface est produite au moyen d'un excitateur d'ondes de surface (10) de type surfatron-guide.

3. Procédé de traitement selon l'une des revendications 1 ou 2, **caractérisé en ce que** ledit gaz vecteur est constitué d'argon.

4. Procédé de traitement selon l'une quelconque des revendications 1 à 3, **caractérisé en ce que** les gaz perfluorés sont choisis notamment parmi CF₄, C₂F₆, C₃F₈, SF₆, et NF₃ et **en ce que** les gaz hydrofluorocarbonés sont choisis parmi CHF₃, CH₂F₂, C₂HF₅ et C₂H₂F₄.

5. Procédé de traitement selon l'une quelconque des revendications 1 à 4, **caractérisé en ce qu'**il comporte en outre une étape de mélange des gaz à traiter avec au moins un gaz adjuvant, préalable à ladite étape de circulation desdits gaz dans lesdits au moins un tube diélectrique (16).

6. Procédé de traitement selon la revendication 5, **caractérisé en ce que** le gaz adjuvant est constitué d'oxygène.

7. Procédé selon l'une des revendication 1 à 6, **caractérisé en ce que** le tube creux diélectrique (16) est refroidi.

8. Procédé de traitement selon l'une quelconque des revendications 1 à 7, **caractérisé en ce que** ladite étape consistant à faire réagir lesdits composés réactifs avec ledit élément réactif (12) correspondant consiste à faire réagir les composés réactifs avec un élément réactif choisi parmi de la chaux sodée, de l'eau et une solution aqueuse alcaline.

9. Procédé selon l'une des revendications 1 à 8, **caractérisé en ce que** plusieurs tubes diélectriques sont associés en parallèle.

10. Procédé selon l'une des revendications précédentes, **caractérisé en ce que** plusieurs applicateurs de micro-ondes sont montés en série sur un même tube diélectrique.

11. Installation de traitement de gaz perfluorés et/ou hydrofluorocarbonés en vue de leur destruction, pour la mise en oeuvre d'un procédé de traitement selon l'une quelconque des revendications 1 à 10, comportant au moins un excitateur d'ondes de surface (10) à hautes fréquences du type micro-ondes associé à un guide d'ondes (18) adapté pour acheminer les ondes de surfaces produites par lesdits au moins un excitateur d'ondes de surfaces(10) vers au moins un tube creux diélectrique (16) alimenté en un gaz vecteur pour y créer un plasma (17) à pression atmosphérique et dans lequel circulent lesdits gaz à traiter, les molécules desdits gaz perfluorés et/ou hydrofluorocarbonés étant dissociées au sein du plasma pour former des composés réactifs, notamment fluorés, et au moins une unité de traitement (12) desdits composés fluorés réactifs disposée en sortie d'un tube creux diélectrique (16) correspondant.

12. Installation selon la revendication 11, **caractérisée en ce que** chaque excitateur d'ondes de surface (10) est équipé d'un manchon cylindrique (20) en matériau conducteur à l'intérieur duquel est monté un tube diélectrique (16) correspondant et comporte une zone (76) de concentration des ondes incidentes dans un espace compris entre la paroi interne dudit excitateur (10) et une extrémité libre dudit manchon (20) en vue d'y créer un champ électrique ayant la direction axiale dudit tube (16).

13. Installation selon la revendication 12, **caractérisée en ce que** ledit manchon (20) comporte un cylindre (66) interne dans lequel est monté ledit tube diélectrique (16) et un cylindre externe (64) délimitant avec ledit cylindre interne (66) une chambre de refroidissement (68) alimentée en liquide de refroidissement.

14. Installation selon l'une des revendications 12 ou 13, **caractérisée en ce que** ledit manchon (20) et ledit tube diélectrique (16) étant séparés par un espace (75) cylindrique, elle comporte des moyens d'alimentation dudit espace (75) en gaz de refroidissement.

15. Installation selon l'une quelconque des revendications 11 à 13, **caractérisée en ce que** ledit tube creux diélectrique (16) est constitué par l'association de deux tubes creux diélectriques proprement dits (83, 84), disposés de façon coaxiale et entre lesquels est ménagée une chambre cylindrique (85) alimentée en gaz vecteur, lesdits gaz perfluorés et/ou hydrofluorocarbonés circulant dans le tube interne (84).

16. Installation selon l'une quelconque des revendications 11 à 15, **caractérisée en ce que** ledit tube diélectrique (16) est réalisé en un matériau insensible aux espèces fluorées, notamment en une céramique telle que l'alumine.

17. Installation selon la revendication 16, **caractérisée en ce qu'**elle comporte en outre un tube en silice (88) coaxial audit tube diélectrique (86) et entre lesquels circule un fluide de refroidissement.

18. Installation selon l'une quelconque des revendications 12 à 17, **caractérisée en ce que** chaque excitateur d'ondes de surface est muni de moyens de réglage d'impédance comportant un piston coaxial (48) au manchon cylindrique formant piège en quart d'onde espacé de la paroi du manchon cylindrique externe (44) dans lequel coulisse le piston.

19. Installation selon l'une quelconque des revendications 12 à 18, **caractérisée en ce que** la paroi de chaque excitateur voisine de la zone de concentration (76) des ondes incidentes est amincie.

20. Installation selon l'une quelconque des revendications 11 à 19, **caractérisée en ce que** lesdites au moins une unité de traitement desdits composés stables réactifs sont constituées chacune par une cartouche de chaux sodée (12).

21. Installation selon l'une quelconque des revendications 11 à 20, **caractérisée en ce qu'**elle comporte au moins deux excitateurs d'ondes de surface (100,102) à hautes fréquences placés en série, au moins deux unités de traitement (104,106) desdits gaz réactifs, notamment fluorés, disposées chacune en sortie d'un excitateur (100,102) correspondant, et au moins une unité de déshydratation (116) interposée entre lesdits au moins deux excitateurs (100,102).

22. Installation selon l'une quelconque des revendications 11 à 21, **caractérisée en ce que** lesdits excitateurs d'ondes de surface sont constitués chacun par un excitateur de type surfatron-guide.

## Claims

1. Process for treating perfluorinated and/or hydrofluorocarbon gases, which includes the steps consisting in:
- creating an atmospheric-pressure plasma (17) in at least one hollow dielectric tube (16) using a travelling electromagnetic surface wave of the microwave type, by making a carrier gas flow through the said dielectric tube (16) and by exciting and ionizing the said carrier gas by means of the electric field of the travelling electromagnetic surface wave moving through the said carrier gas and through the said dielectric tube (16) so as to create a column of plasma (17) which is not in local thermodynamic equilibrium;
- making the said gases to be treated flow through the said at least one dielectric tube (16) in contact with the said plasma (17) for the purpose of dissociating the molecules of which the said gases are composed in order to form reactive compounds, especially fluorinated compounds; and
- making the said reactive compounds formed react with a corresponding reactive element (12) for the purpose of destroying them.

2. Treatment process according to Claim 1, **characterized in that** the surface wave is produced by means of a surface-wave exciter (10) of the surfatron-guide type.

3. Treatment process according to either of Claims 1 and 2, **characterized in that** the said carrier gas consists of argon.

4. Treatment process according to any one of Claims 1 to 3, **characterized in that** the perfluorinated gases are chosen in particular from CF₄, C₂F₆, C₃F₈, SF₆ and NF₃ and **in that** the hydrofluorocarbon gases are chosen from CHF₃, CH₂F₂, C₂HF₅ and C₂H₂F₄.

5. Treatment process according to any one of Claims 1 to 4, **characterized in that** it furthermore includes a step of mixing the gases to be treated with at least one assistant gas, prior to the said step of making the said gases flow through the said at least one dielectric tube (16).

6. Treatment process according to Claim 5, **characterized in that** the assistant gas consists of oxygen.

7. Process according to one of Claims 1 to 6, **characterized in that** the hollow dielectric tube (16) is cooled.

8. Treatment process according to any one of Claims 1 to 7, **characterized in that** the said step consisting in making the said reactive compounds react with the said corresponding reactive element (12) consists in making the reactive compounds react with a reactive element chosen from soda lime, water and an alkaline aqueous solution.

9. Process according to one of Claims 1 to 8, **characterized in that** several dielectric tubes are associated in parallel.

10. Process according to one of the preceding claims, **characterized in that** several microwave applicators are connected in series on one and the same dielectric tube.

11. Apparatus for the treatment of perfluorinated and/or hydrofluorocarbon gases, for the purpose of destroying them, for the implementation of a treatment process according to any one of Claims 1 to 10, which includes at least one microwave-type high-frequency surface-wave exciter (10) combined with a waveguide (18) designed to guide the surface waves produced by the said at least one surface-wave exciter (10) to at least one hollow dielectric tube (16) supplied with a carrier gas in order to create therein an atmospheric-pressure plasma (17) and through which the said gases to be treated flow, the molecules of the said perfluorinated and/or hydrofluorocarbon gases being dissociated within the plasma in order to form reactive compounds, in particular reactive fluorinated compounds, and at least one treatment unit (12) for the said reactive fluorinated compounds which is arranged on the exit side of a corresponding hollow dielectric tube (16).

12. Apparatus according to Claim 11, **characterized in that** each surface-wave exciter (10) is equipped with a cylindrical sleeve (20) made of conductive material, inside which is mounted a corresponding dielectric tube (16), and includes a region (76) for concentrating the incident waves in a space lying between the internal wall of the said exciter (10) and a free end of the said sleeve (20) for the purpose of creating therein an electric field having the axial direction of the said tube (16).

13. Apparatus according to Claim 12, **characterized in that** the said sleeve (20) includes an inner cylinder (66), in which the said dielectric tube (16) is mounted, and an outer cylinder (64) which, with the said inner cylinder (66), delimits a cooling chamber (68) supplied with a liquid coolant.

14. Apparatus according to either of Claims 12 and 13, **characterized in that**, since the said sleeve (20) and the said dielectric tube (16) are separated by a cylindrical space (75), it includes means for supplying the said space (75) with a gaseous coolant.

15. Apparatus according to any one of Claims 11 to 13, **characterized in that** the said hollow dielectric tube (16) consists of the combination of two hollow dielectric tubes proper (83, 84) which are arranged coaxially and between which is left a cylindrical chamber (85) supplied with carrier gas, the said perfluorinated and/or hydrofluorocarbon gases flowing through the inner tube (84).

16. Apparatus according to any one of Claims 11 to 15, **characterized in that** the said dielectric tube (16) is made of a material insensitive to the fluorinated species, in particular made of a ceramic such as alumina.

17. Apparatus according to Claim 16, **characterized in that** it furthermore includes a silica tube (88) coaxial with the said dielectric tube (86) and between which tubes a coolant flows.

18. Apparatus according to any one of Claims 12 to 17, **characterized in that** each surface-wave exciter is provided with impedance-adjustment means which include a plunger (48) coaxial with the cylindrical sleeve and forming a quarter-wave trap spaced apart from the wall of the outer cylindrical sleeve (44) in which the plunger slides.

19. Apparatus according to any one of Claims 12 to 18, **characterized in that** the wall of each exciter, close to the incident-wave concentration region (76), is thinned down.

20. Apparatus according to any one of Claims 11 to 19, **characterized in that** the said at least one treatment unit for the said reactive stable compounds each consist of a soda-lime cartridge (12).

21. Apparatus according to any one of Claims 11 to 20, **characterized in that** it includes at least two high-frequency surface-wave exciters (100, 102) placed in series, at least two treatment units (104, 106) for the said reactive gases, in particular reactive fluorinated gases, each arranged on the exit side of a corresponding exciter (100, 102), and at least one dehydration unit (116) inserted between the said at least two exciters (100, 102).

22. Apparatus according to any one of Claims 11 to 21, **characterized in that** the said surface-wave exciters each consist of an exciter of the surfatron-guide type

## Patentansprüche

1. Verfahren zur Behandlung von gasförmigen Perfluorverbindungen und/oder teilfluorierten Fluorkohlenwasserstoffen, bei dem man:
- in mindestens einem dielektrischen Hohlrohr (16) mit Hilfe einer wandernden elektromagnetischen Oberflächenwelle vom Mikrowellentyp durch Hindurchleiten eines Trägergases durch das dielektrische Rohr (16) und Anregung und Ionisierung des Trägergases mittels des elektrischen Felds der wandernden elektromagnetischen Oberflächenwelle, die das Trägergas und das dielektrische Rohr (16) so durchströmt, daß sich eine nicht in lokalem thermodynamischem Gleichgewicht stehende Plasmasäule (17) bildet, ein Atmosphärendruckplasma (17) erzeugt;
- die zu behandelnden Gase in Kontakt mit dem Plasma (17) durch das mindestens eine dielektrische Rohr (16) leitet, wodurch die Moleküle, aus denen die Gase bestehen, unter Bildung von reaktiven Verbindungen, insbesondere Fluorverbindungen, dissoziieren; und
- die gebildeten reaktiven Verbindungen mit einem entsprechenden reaktiven Element (12) umsetzt und dadurch zerstört.

2. Behandlungsverfahren nach Anspruch 1, **dadurch gekennzeichnet, daß** man die Oberflächenwelle mittels eines Oberflächenwellenerregers (10) vom Guide-Surfatron-Typ erzeugt.

3. Behandlungsverfahren nach Anspruch 1 oder 2, **dadurch gekennzeichnet, daß** das Trägergas aus Argon besteht.

4. Behandlungsverfahren nach einem der Ansprüche 1 bis 3, **dadurch gekennzeichnet, daß** man die gasförmigen Perfluorverbindungen insbesondere unter CF₄, C₂F₆, C₃F₈, SF₆ und NF₃ auswählt und die gasförmigen teilfluorierten Fluorkohlenwasserstoffe unter CHF₃, CH₂F₂, C₂HF₅ und C₂H₂F₄ auswählt.

5. Behandlungsverfahren nach einem der Ansprüche 1 bis 4, **dadurch gekennzeichnet, daß** man außerdem die zu behandelnden Gase vor dem Hindurchleiten durch das mindestens eine dielektrische Rohr (16) mit mindestens einem Hilfsgas vermischt.

6. Behandlungsverfahren nach Anspruch 5, **dadurch gekennzeichnet, daß** das Hilfsgas aus Sauerstoff besteht.

7. Verfahren nach einem der Ansprüche 1 bis 6, **dadurch gekennzeichnet, daß** man das dielektrische Hohlrohr (16) kühlt.

8. Behandlungsverfahren nach einem der Ansprüche 1 bis 7, **dadurch gekennzeichnet, daß** man beim Schritt der Umsetzung der reaktiven Verbindungen mit dem entsprechenden reaktiven Element (12) die reaktiven Verbindungen mit einem unter Natronkalk, Wasser und einer wäßrig-alkalischen Lösung ausgewählten reaktiven Element umsetzt.

9. Verfahren nach einem der Ansprüche 1 bis 8, **dadurch gekennzeichnet, daß** mehrere dielektrische Rohre parallel geschaltet werden.

10. Verfahren nach einem der vorhergehenden Ansprüche, **dadurch gekennzeichnet, daß** mehrere Mikrowellenapplikatoren an einem dielektrischen Rohr in Reihe angebracht werden.

11. Vorrichtung zur Behandlung von gasförmigen Perfluorverbindungen und/oder teilfluorierten Fluorkohlenwasserstoffen zwecks Zerstörung davon zur Durchführung eines Behandlungsverfahrens nach einem der Ansprüche 1 bis 10, enthaltend mindestens einen Hochfrequenzoberflächenwellenerreger (10) vom Mikrowellentyp in Verbindung mit einem Wellenleiter (18) zur Zuführung der durch den mindestens einen Oberflächenwellenerreger (10) erzeugten Oberflächenwellen zu mindestens einem mit einem Trägergas versorgten dielektrischen Hohlrohr (16) zur Erzeugung eines Atmosphärendruckplasmas (17) in dem Rohr, durch welches die zu behandelnden Gase strömen, wobei die Moleküle der gasförmigen Perfluorverbindungen und/oder teilfluorierten Fluorkohlenwasserstoffe in dem Plasma unter Bildung von reaktiven Verbindungen, insbesondere Fluorverbindungen, dissoziieren, und mindestens eine Einheit (12) zur Behandlung der reaktiven Fluorverbindungen, die auf der Austrittsseite eines entsprechenden dielektrischen Hohlrohrs (16) angeordnet ist.

12. Vorrichtung nach Anspruch 11, **dadurch gekennzeichnet, daß** jeder Oberflächenwellenerreger (10) mit einer zylindrischen Hülse (20) aus leitfähigem Material, in deren Inneren ein entsprechendes dielektrisches Rohr (16) montiert ist, ausgestattet ist und eine Zone (76) der Konzentration der einfallenden Wellen in einem Raum zwischen der Innenwand des Erregers (10) und einem freien Ende der Hülse (20) aufweist, um darin ein elektrisches Feld in Axialrichtung des Rohrs (16). zu erzeugen.

13. Vorrichtung nach Anspruch 12, **dadurch gekennzeichnet, daß** die Hülse (20) einen inneren Zylinder (66), in dem das dielektrische Rohr (16) montiert ist, und einen äußeren Zylinder (64), der mit dem inneren Zylinder (66) eine mit Kühlflüssigkeit versorgte Kühlkammer (68) begrenzt, aufweist.

14. Vorrichtung nach Anspruch 12 oder 13, **dadurch gekennzeichnet, daß** sie aufgrund dessen, daß die Hülse (20) und das dielektrische Rohr (16) durch einen zylindrischen Raum (75) getrennt sind, Mittel zum Versorgen des Raums (75) mit Kühlgas aufweist.

15. Vorrichtung nach einem der Ansprüche 11 bis 13, **dadurch gekennzeichnet, daß** das dielektrische Hohlrohr (16) aus der Kombination von zwei eigentlichen dielektrischen Hohlrohren (83, 84) besteht, die koaxial angeordnet sind und zwischen denen eine mit Trägergas versorgte zylindrische Kammer (85) ausgespart ist, wobei die gasförmigen Perfluorverbindungen und/oder teilfluorierten Fluorkohlenwasserstoffe durch das innere Rohr (84) strömen.

16. Vorrichtung nach einem der Ansprüche 11 bis 15, **dadurch gekennzeichnet, daß** das dielektrische Rohr (16) aus einem gegenüber Fluorspezies unempfindlichen Material gefertigt ist, insbesondere aus einer Keramik wie Aluminiumoxid.

17. Vorrichtung nach Anspruch 16, **dadurch gekennzeichnet, daß** sie außerdem ein mit dem dielektrischen Rohr (86) koaxiales Siliciumoxidrohr (88) aufweist und diese Rohre von einer Kühlflüssigkeit durchströmt werden.

18. Vorrichtung nach einem der Ansprüche 12 bis 17, **dadurch gekennzeichnet, daß** jeder Oberflächenwellenerreger mit Impedanzregeleinrichtungen ausgestattet ist, die einen mit der zylindrischen Hülse koaxialen Kolben (48) aufweisen, der eine von der Wand der äußeren zylindrischen Hülse (44), in der sich der Kolben bewegt, beabstandete Viertelwellenfalle bildet.

19. Vorrichtung nach einem der Ansprüche 12 bis 18, **dadurch gekennzeichnet, daß** sich die Wand jedes Erregers in der Nähe der Zone (76) der Konzentration der einfallenden Wellen verjüngt.

20. Vorrichtung nach einem der Ansprüche 11 bis 19, **dadurch gekennzeichnet, daß** die mindestens eine Einheit zur Behandlung der reaktiven stabilen Verbindungen jeweils aus einer Natronkalkpatrone (12) besteht.

21. Vorrichtung nach einem der Ansprüche 11 bis 20, **dadurch gekennzeichnet, daß** sie mindestens zwei in Reihe geschaltete Hochfrequenzoberflächenwellenerreger (100, 102), mindestens zwei Einheiten (104, 106) zur Behandlung der reaktiven Gase, insbesondere fluorierten Gase, die jeweils am Ausgang eines entsprechenden Erregers (100, 102) angeordnet sind, und mindestens eine zwischen den mindestens zwei Erregern (100, 102) angeordnete Entwässerungseinheit (116) aufweist.

22. Vorrichtung nach einem der Ansprüche 11 bis 21, **dadurch gekennzeichnet, daß** die Oberflächenwellenerreger jeweils aus einem Erreger vom Guide-Surfatron-Typ bestehen.
